# EUROPÄISCHE PATENTSCHRIFT

(11) **EP 1 114 753 B1**
(45) Veröffentlichungstag und Bekanntmachung des Hinweises auf die Patenterteilung: **03.03.2004**
(21) Anmeldenummer: 00126909.1
(22) Anmeldetag: 08.12.2000
(51) Int. Cl.: B60R 19/34, F16F 7/12

(54) **Aufpralldämpfer**
Shock absorber
Amortisseur de choc

(30) Priorität: 07.01.2000 DE 10000285
(43) Veröffentlichungstag der Anmeldung: 11.07.2001
(73) Patentinhaber: Wagon Automotive GmbH, 63857 Waldaschaff (DE)
(72) Erfinder: Beck, Manfred, 63500 Seligenstadt (DE)
(74) Vertreter: Gesthuysen, von Rohr & Eggert

(56) Entgegenhaltungen:
- DE-A- 4 211 964
- DE-A- 19 814 842
- FR-A- 2 238 869
- US-A- 3 564 688
- PATENT ABSTRACTS OF JAPAN vol. 007, no. 169 (M-231), 26. Juli 1983 (1983-07-26) -& JP 58 073475 A (MITSUBISHI JIDOSHA KOGYO KK), 2. Mai 1983 (1983-05-02)

## Beschreibung

Die Erfindung betrifft einen Aufpralldämpfer für Kraftfahrzeuge, der durch plastische Deformation bei einem Aufprall Energie aufnimmt.

Zum Schutz der Insassen eines Fahrzeuges bei einem Front- oder Heckaufprall ist es bekannt, die an den stoßstangenseitigen Querträgern angeordneten Längsträger, die ihrerseits mit der Fahrgastzelle verbunden sind, derart auszugestalten, daß sie die durch den Aufprall freiwerdende Energie durch Verformung aufnehmen. Eine derartige Verformung kann einerseits dadurch erreicht werden, daß die Längsträger gebogen sind, wobei das beim Aufprall entstehende Biegemoment zu einer Verformung des Längsträgers führen und die Verformungsstellen durch die Wahl der Querschnitte bestimmt werden. Andererseits kann eine Verformung der Längsträger in Längsrichtung auch durch Sicken herbeigeführt werden.

Aufpralldämpfer der vorstehend erwähnten Art, bei denen im wesentlichen nur die Längsträger selbst den jeweiligen Aufpralldämpfer bilden, sind relativ aufwendig herzustellen. Da die Aufpralldämpfer auch im niedrigen Geschwindigkeitsbereich (z. B. bei 10 km/h) einen Aufprall abfangen müssen, müssen die Längsträger entsprechend häufig nach Zusammenstößen ersetzt werden, was außerordentlich zeitaufwendig und teuer ist.

Aus der DE 42 39 460 A1 ist ein Aufpralldämpfer bekannt, der aus einem relativ kurzen Hohlkörper besteht und zwischen dem stoßstangenseitigen Querträger und dem dazugehörigen Längsträger des entsprechenden Fahrzeuges eingesetzt wird. Bei dem Hohlkörper handelt es sich z. B. um ein Rohrstück, welches derart ausgestaltet ist, daß es bei einem Aufprall des Fahrzeuges gestaucht wird und dabei in Längsrichtung mehrere Ringfalten bildet.

Nachteilig ist bei diesem Aufpralldämpfer, daß die Stauchung des rohrförmigen Hohlkörpers nicht zum Auftreten genau definierter Ringfalten führt, so daß eine genaue geschwindigkeitsabhängige Anpassung des Aufprallverhaltens des jeweiligen Kraftfahrzeuges mit derartigen Aufpralldämpfern nicht möglich ist. Außerdem besitzt ein derartiger Aufpralldämpfer eine unerwünscht hohe erste Traglastspitze und bei nicht idealer axialer Lasteinleitung aufgrund des dann auftretenden Biegekollapsverhaltens eine stark verminderte Energieaufnahme.

In der DE 42 39 460 A1 wird ebenfalls bereits vorgeschlagen, zur sicheren Bildung von symmetrischer Ringfalten im Kollisionsfalle das Rohrstück in Längsrichtung vorzustauchen, so daß es in seiner Ausgangslage bereits leicht ausgebeult oder ausgebaucht ist. Versuche haben gezeigt, daß bei einem derartigen Aufpralldämpfer auch die Energieaufnahme bei nicht idealer Lasteinleitung (schräger Aufprall) besser ist als bei nicht vorgestauchten rohrförmigen Aufpralldämpfern. Allerdings ist bei den bekannten vorgestauchten rohrförmigen Aufpralldämpfern eine genaue Abstimmung auf das fahrzeugspezifische gewünschte Aufprallverhalten schwierig zu erreichen, weil das bei einem Aufprall sich ergebende Kraftniveau im Kraft-Weg-Diagramm relativ niedrig und damit die Energieabsorption relativ gering ist. Ferner ergibt sich bei dem Faltungsvorgang ein oszillierender Kraftverlauf mit ausgeprägten Extremwerten.

Einen der DE 42 39 460 A1 entsprechenden Aufpralldämpfer offenbart auch die DE 198 14 842 A1 die den Oberbegriff des Anspruchs 1 zeigt, wobei dort der Aufpralldämpfer hutförmig ausgebildet ist, so daß seine Endbereiche gleichzeitig als Flanschteile verwendet werden können.

Aus der Japanischen Druckschrift 2-175452 A ist ferner ein Aufpralldämpfer bekannt, der einen rohrförmigen Hohlkörper mit rechteckförmigem Querschnitt umfaßt. Dabei sind zur Faltenbildung in die gegenüberliegenden breiten Seitenflächen abwechselnd nach innen und nach außen gerichtete Sikken eingebracht. Auch die schmalen Seitenflächen des Hohlkörpers weisen gegenüberliegende Sicken auf, welche die in den breiten Seitenflächen befindlichen Sicken umfangseitig fortsetzen, aber zu diesen eine entgegengesetzte Richtung aufweisen.

Durch die Anordnung dieser Sicken wird zwar ebenfalls erreicht, daß im Kollisionsfall ein symmetrisches Zusammenfalten des Hohlkörpers erfolgt, aber die erreichbare Energieaufnahme ist insbesondere bei nichtaxialer Krafteinleitung gering. Außerdem ist bei derartigen Aufpralldämpfern die erste Traglastspitze wesentlich höher als die Kräfte, die zum Einwerfen der nachfolgenden, mit relativ ausgeprägten Kraftspitzen verbundenen Falten erforderlich sind.

Schließlich ist aus der japanischen Druckschrift 8-276804 A ein Aufpralldämpfer bekannt, der einen rohrförmigen Hohlkörper mit rechteckförmigem Querschnitt umfaßt und zur Faltenbildung sowohl in Querrichtung verlaufende, nach außen gewölbte Sicken als auch in den Eckbereichen in Längsrichtung verlaufende Ausnehmungen aufweist. Außerdem ist in der Mine der vier Seitenflächen jeweils eine nach außen gewölbte und sich in axialer Richtung erstreckende Sicke vorgesehen.

Versuche der Anmelderin mit derartigen Aufpralldämpfern haben ergeben, daß die Energieabsorption bei einem axialen Aufprall gering ist, da lediglich eine einzige Falte erzeugt wird.

Der Erfindung liegt die Aufgabe zugrunde, einen Aufpralldämpfer der eingangs erwähnten Art anzugeben, der einfach und billig herstellbar ist und der auf einfache Weise eine genaue Anpassung an ein vorgebbares Aufprallverhalten des Fahrzeuges ermöglicht.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, als Aufpralldämpfer einen rohrförmigen Hohlkörper mit kreisförmigen, ovalen, mehreckigen, insbesondere rechteckigen oder quadratischen Querschnitt zu verwenden, der mindestens drei gleichmäßig über seinen Umfang verteilt angeordnete und sich in Richtung der Längsachse des Hohlkörpers erstreckende durchgehende stegförmige Bereiche und mindestens zwei die Längsachse des Hohlkörpers ringförmig oder schraubenförmig umschließende gewölbte Bereiche aufweist.

Während durch das gezielte Einbringen mehrerer hintereinander angeordneter, nach außen gewölbter und die Längsachse des Hohlkörpers umschließender Ausbuchtungen ein reproduzierbarer Faltvorgang sichergestellt wird, läßt sich durch die Ausgestaltung der stegförmigen Bereiche die Höhe des Kraftniveaus des sich bei einem Aufprall ergebenden Kraft-Weg-Diagrammes relativ genau einstellen. Außerdem ergibt sich ein gleichmäßigeres Faltenbild, d.h., die bei dem Faltungsvorgang auftretenden Kraftspitzen weisen eine geringere Höhe auf als die bei den bekannten vergleichbaren Aufpralldämpfern ohne stegförmige Bereiche.

Überraschenderweise ergibt sich bei Verwendung der erfindungsgemäßen Aufpralldämpfer auch bei nichtaxialer Lasteinleitung eine höhere Energieaufnahme als bei vergleichbaren vorgestauchten rohrförmigen Aufpralldämpfern.

Die stegförmigen Bereiche können - in Umfangsrichtung gesehen - gerade, nach außen oder nach innen gewölbt ausgebildet sein.

Besonders kostengünstig lassen sich die erfindungsgemäßen Aufpralldämpfer fertigen, wenn der Hohlkörper topfförmig ausgebildet ist, wobei der Boden des Topfes gleichzeitig als Flanschplatte ausgebildet und die dem Boden abgewandte Seite des Hohlkörpers nach außen gebogen ist, so daß der dadurch gebildete Rand entweder direkt als Flansch oder zur Befestigung an einer entsprechenden Flanschplatte dienen kann. Die topfförmige Herstellung des Hohlkörpers läßt sich auf einfache Weise durch Tiefziehen eines Bleches erreichen, wobei nach dem Tiefziehen durch ein weiteres Formverfahren (vorzugsweise Innen-Hochdruckverfahren) die vorgegebenen Ausbuchtungen in die Seitenwände eingebracht werden können.

Im Falle von Aufpralldämpfern mit einem runden Querschnitt hat es sich als vorteilhaft erwiesen, wenn mindestens sechs gleichmäßig über den Umfang verteilt angeordnete axiale stegförmige Bereiche vorgesehen sind, um eine gute Anpassung des Dämpfers an das Aufprallverhalten des entsprechenden Fahrzeuges zu ermöglichen. Im Falle von Aufpralldämpfern mit einem mehreckigen Querschnitt sollte die Anzahl der axialen stegförmigen Bereiche vorzugsweise mindestens der Anzahl der Ecken entsprechen.

Als Material für den Hohlkörper hat sich als besonders vorteilhaft Stahlblech oder Aluminium mit einer ausreichenden Dehnung bewährt.

Weitere Einzelheiten und Vorteile der Erfindung ergeben sich aus den folgenden anhand von Figuren erläuterten Ausführungsbeispielen. Es zeigen:
- Fig. 1: die Seitenansicht eines Ausführungsbeispieles des zwischen dem Querträger und dem Längsträger eines Kraftfahrzeuges angeordneten erfindungsgemäßen Aufpralldämpfers mit neun stegförmigen Bereichen und sechs die Längsachse des Aufpralldämpfers ringförmig umschließenden gewölbten Bereichen;
- Fig. 2: ein Kraft-Weg-Diagramm des in Fig. 1 dargestellten erfindungsgemäßen Aufpralldämpfers bei einem Aufprall in axialer Richtung (Kurve a)) sowie eines Aufpralldämpfers lediglich mit ringförmigen Ausbuchtungen (Kurve b));
- Fig. 3: die perspektivische Ansicht des in Fig. 1 dargestellten Aufpralldämpfers;
- Fig. 4: die perspektivische Ansicht eines erfindungsgemäßen Aufpralldämpfers mit einer schrägen Bodenplatte und
- Fig. 5.: ein Kraft-Weg-Diagramm des in Fig. 4 dargestellten Aufpralldämpfers.

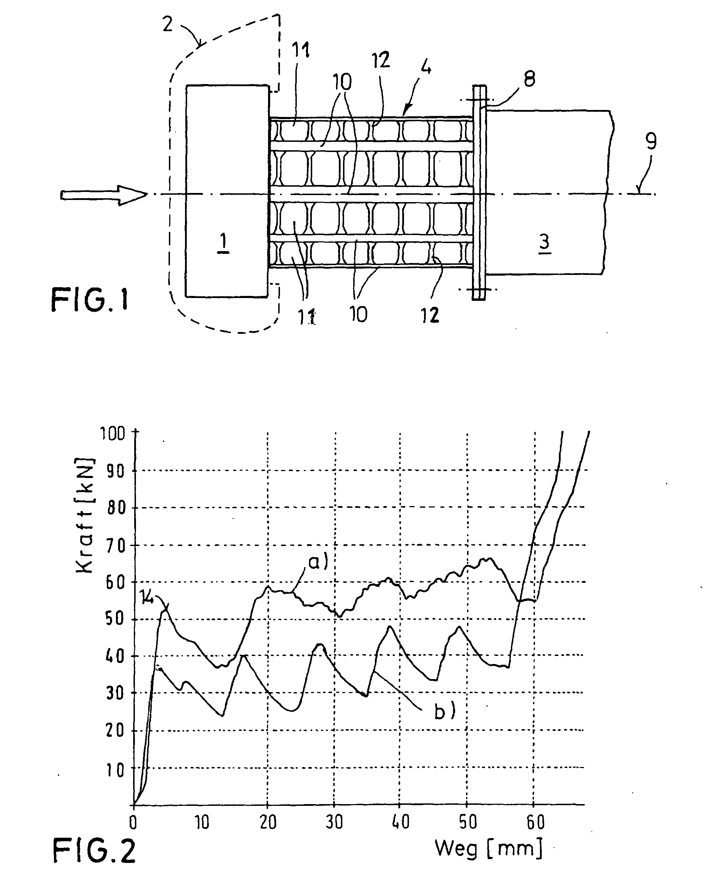

In Fig. 1 ist mit 1 der an einem vorderseitigen Stoßfänger 2 angeordnete Querträger und mit 3 ein Längsträger bezeichnet, der sich bis zu der aus Übersichtlichkeitsgründen nicht dargestellten Fahrgastzelle eines Kraftfahrzeuges erstreckt. Zwischen dem Querträger 1 und dem Längsträger 3 ist ein aus einem Metallblech (mit der DIN-Bezeichnung DC 04) bestehender erfindungsgemäßer Aufpralldämpfer 4 angeordnet. Die Wandstärke des Metallbleches beträgt bei dem dargestellten Ausführungsbeispiel 1,5 mm.

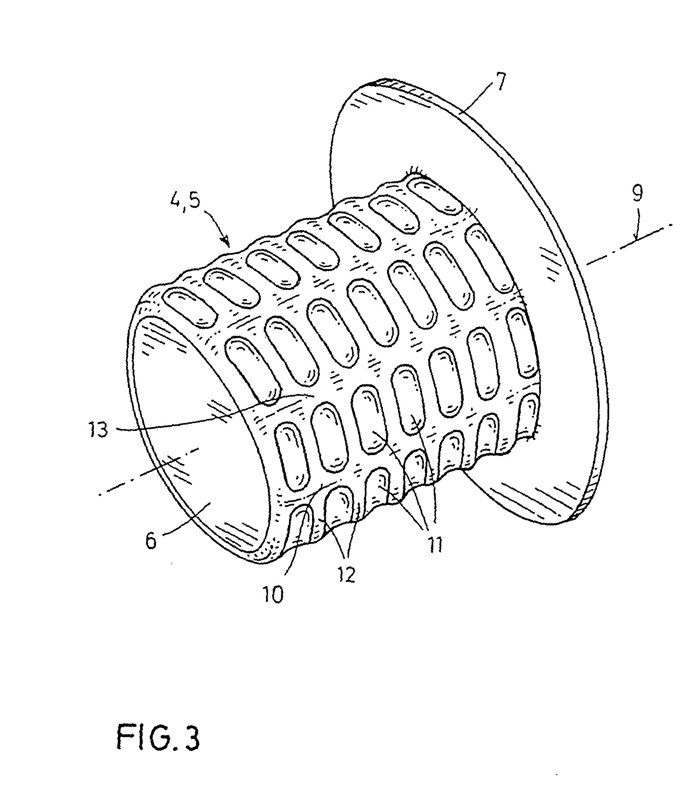

Der Aufpralldämpfer 4 besteht aus einem topfförmig ausgebildeten Hohlkörper 5 (Fig. 3), dessen Boden 6 gleichzeitig als Flanschplatte zur Verbindung des Aufpralldämpfers 4 mit dem Querträger 1 dient. Die dem Boden 6 abgewandte Seite 7 des Hohlkörpers 5 ist nach außen gebogen und ist mit einer Flanschplatte 8 des Längsträgers 3 verbunden.

Der rohrförmige Hohlkörper 5 weist neun gleichmäßig über seinen Umfang verteilt und sich in Richtung der Längsachse 9 des Hohlkörpers 5 erstrekkende durchgehende stegförmige Bereiche 10 auf. Die stegförmigen Bereiche sind - in Umfangsrichtung gesehen - nach außen gewölbt und besitzen in axialer Richtung einen leicht wellenförmigen Verlauf (Fig. 3).

Zwischen benachbarten stegförmigen Bereichen 10 sind in der Wand des Hohlkörpers 5 jeweils sieben parallele, in Umfangsrichtung verlaufende und zum Innenraum des Hohlkörpers gerichtete Sicken 11 angeordnet, derart, daß sich - in axialer Richtung gesehen - zwischen benachbarten Sicken nach außen gewölbte Bereiche 12 ergeben, wobei die umfangseitig benachbarten gewölbten Bereiche 12 die Längsachse 9 des Hohlkörpers 5 kreisringförmig umschließen. In Umfangsrichtung benachbarte Sicken 11 werden dabei durch die Wellentäler 13 der stegförmigen Bereiche 10 verbunden, wobei allerdings die Wellentäler eine wesentlich geringere Tiefe als die Sicken 11 aufweisen.

In Fig. 2 gibt die mit a) bezeichnete Kurve die Deformationskraft in Abhängigkeit vom Verformungsweg für den erfindungsgemäßen Aufpralldämpfer 4 wieder, während die mit b) bezeichnete Kurve den Kraftverlauf für einen entsprechenden Aufpralldämpfer ohne stegförmige Bereiche zeigt. Der Fig. ist unmittelbar entnehmbar, daß durch die durchgehenden stegförmigen Bereiche 10 und durch die in Umfangsrichtung liegenden gewölbten Bereiche 12 nicht nur eine Anhebung der ersten Kraftspitze 14 erfolgt, sondern daß (überraschenderweise) auch das gesamte sich anschließende Kraftniveau höher liegt als im Falle der Kurve b).

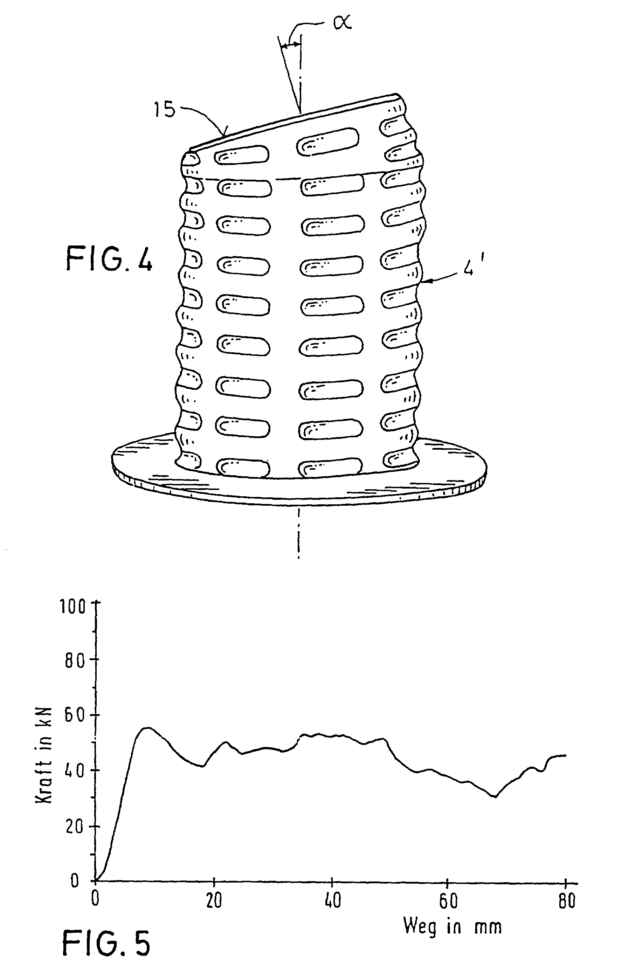

Die Erfindung ist selbstverständlich nicht auf das vorstehend beschriebene Ausführungsbeispiel beschränkt. So kann beispielsweise der Aufpralldämpfer einen Boden 15 mit schrägem Verlauf aufweisen. Ein entsprechendes Ausführungsbeispiel zeigt Fig. 4. Dabei wurde wiederum als Werkstoff für den Aufpralldämpfer Stahl DC 04 verwendet. Der Aufpralldämpfer ist mit 4' bezeichnet. Der Druckwinkel a beträgt 15°. Das Kraft-Weg-Diagramm für diesen Aufpralldämpfer ist in Fig. 5 dargestellt.

Als vorteilhaft hat es sich erwiesen, wenn die Sicken 11 und damit auch die durch die Sicken gebildeten gewölbten Bereiche 12 in Umfangsrichtung einen schraubenförmigen Verlauf aufweisen. Denn hierdurch kommt es zu einer Glättung des Kraftverlaufes (reproduzierbaren Abflachung der einzelnen Druckspitzen), ohne daß dadurch die Energieabsorption vermindert wird.

Ferner muß es sich bei dem Aufpralldämpfer nicht zwingend um ein von dem Längsträger des entsprechenden Fahrzeuges separates Element handeln, sondern der erfindungsgemäße Aufpralldämpfer kann auch in einen Teilbereich des Längsträgers integriert sein. In diesem Falle ist je nach der zu absorbierenden Aufprallenergie die Anzahl und Ausgestaltung der stegförmigen Bereiche sowie der durch die Sicken definierten gewölbten Bereiche entsprechend zu wählen. Selbstverständlich kann auch ein separater Aufpralldämpfers mit einem Längsträger verbunden sein, welcher einen entsprechenden integrierten Aufpralldämpfer umfaßt, wobei die beiden Aufpralldämpfer Energie in unterschiedlichen Geschwindigkeitsbereichen absorbieren (z.B. ist der separate Aufpralldämpfer bis zu Geschwindigkeiten von 15 km/h und der in den Längsträger integrierte Aufpralldämpfer bis zu Geschwindigkeiten von 30 km/h wirksam).

Schließlich muß der Aufpralldämpfer nicht zwingend einen runden Querschnitt besitzen, sondern kann auch einen mehreckigen, insbesondere einen rechteckigen oder quadratischen Querschnitt aufweisen. Die Herstellung derartiger Aufpralldämpfer kann dabei auf einfache Weise mit Hilfe von entsprechend vorgeprägten Blechen erfolgen, die zur Fertigung der Dämpfer geformt und dann gefügt (z. B. verschweißt) werden.

## Patentansprüche

1. Aufpralldämpfer für Kraftfahrzeuge, der durch plastische Deformation bei einem Aufprall Energie aufnimmt,
mit mindestens einem aus Metall bestehenden rohrförmigen Hohlköper (5) mit kreisförmigem, ovalem oder mehreckigem, insbesondere rechteckigem oder quadratischem Querschnitt,
wobei mindestens drei sich in Richtung der Längsachse (9) des Hohlkörpers (5) erstreckende stegförmige Bereiche (10) vorgesehen sind,
wobei in der Wand des Hohlkörpers (5) mindestens drei parallele, in Umfangsrichtung verlaufende und zum Innenraum des Hohlkörpers gerichtete Sicken (11) angeordnet sind und
wobei die Anordnung der Sicken (11) so getroffen ist, das sich - in axialer Richtung gesehen - zwischen benachbarten Sicken (11) nach außen gewölbte Bereiche (12) ergeben,
**dadurch gekennzeichnet,**
**daß** die stegförmigen Bereiche (10) im Hohlkörper (5) ausgebildet und über den Umfang des Hohlkörpers (5) gleichmäßig verteilt angeordnet sind,
**daß** jeweils minderdens drei in Umfangsrichtung verlaufende Sicken (11) zwischen benachbarten stegförmigen Bereichen (10) angeordnet sind und
**daß** die umfangsseitig benachbarten gewölbten Bereiche (12) zwischen den Sicken (11) die Längsachse (9) des Hohlkörpers (5) kreisringförmig oder schraubenförmig umschließen.

2. Aufpralldämpfer nach Anspruch 1, **dadurch gekennzeichnet, daß** bei einem Hohlkörper (5) mit kreisförmigem oder ovalem Querschnitt mindestens sechs sich in Richtung der Längsachse (9) erstreckende stegförmige Bereiche (10) vorgesehen sind.

3. Aufpralldämpfer nach Anspruch 1, **dadurch gekennzeichnet, daß** bei einem Hohlkörper (5) mit mehreckigem Querschnitt die Anzahl der sich in Richtung der Längsachse (9) erstreckenden stegförmigen Bereiche (10) mindestens gleich der Anzahl der Ecken ist.

4. Aufpralldämpfer nach einem der Ansprüche 1 bis 3, **dadurch gekennzeichnet, daß** die stegförmigen Bereiche (10) in axialer Richtung jeweils einen wellenförmigen Verlauf aufweisen, wobei sich die Wellentäler (13) jeweils in dem Verbindungsbereich - in Umfangsrichtung gesehen - benachbarter Sicken (11) befinden und wobei die Wellentäler (13) jeweils eine Tiefe aufweisen, die geringer ist als die Tiefe der Sicken (11).

5. Aufpralldämpfer nach einem der Ansprüche 1 bis 4, **dadurch gekennzeichnet, daß** zwischen benachbarten stegförmigen Bereichen (10) in der Wand des Hohlkörpers (5) mindestens vier parallele in Umfangsrichtung verlaufende Sicken (11) angeordnet sind.

6. Aufpralldämpfer nach einem der Ansprüche 1 bis 5, **dadurch gekennzeichnet, daß** der Hohlkörper (5) aus Stahl oder Aluminium besteht.

7. Aufpralldämpfer nach einem der Ansprüche 1 bis 7, **dadurch gekennzeichnet, daß** der Hohlkörper (5) topfförmig und der Boden (6) des Hohlkörpers (5) als Flansch ausgebildet ist.

8. Aufpralldämpfer nach Anspruch 7, **dadurch gekennzeichnet, daß** die dem Boden (6) abgewandte Seite (7) des Hohlkörpers (5) derart nach außen gebogen ist, daß der dadurch gebildete Randbereich entweder selbst als Flansch verwendbar oder mit einer dem Hohlkörper (5) zugeordneten Flanschplatte verbindbar ist.

## Claims

1. An impact absorbing device for motor vehicles, which absorbs energy by plastic deformation on an impact,
comprising at least one tubular hollow body (5) which consists of metal and which has a circular, oval or polygonal cross-section, particularly a rectangular or square cross-section,
wherein at least three rib-like regions (10) are provided which extend in the direction of the longitudinal axis (9) of the hollow body (5),
wherein at least three parallel beads (11), which extend peripherally and which are oriented towards the interior space of the hollow body, are disposed in the wall of the hollow body (5), and
wherein the arrangement of the beads (11) is designed so that - as seen in an axial direction-outwardly curved regions (12) are formed between adjacent beads (11),
**characterised in that**
the rib-like regions (10) are formed in the hollow body (5) and are disposed uniformly distributed over the periphery of the hollow body (5),
that the at least three beads (11), each of which extends peripherally, are disposed between adjacent rib-like regions (10), and
that the peripherally adjacent curved regions (12) between the beads (11) surround the longitudinal axis (9) of the hollow body (5) annularly or helically.

2. An impact absorbing device according to claim 1, **characterised in that** for a hollow body (5) with a circular or oval cross-section at least six rib-like regions (10) are provided which extend in the direction of the longitudinal axis (9).

3. An impact absorbing device according to claim 1, **characterised in that** for a hollow body (5) with a polygonal cross-section the number of rib-like regions (10) which extend in the direction of the longitudinal axis (9) is at least equal to the number of vertexes.

4. An impact absorbing device according to any one of claims 1 to 3, **characterised in that** the rib-like regions (10) each extend axially in the form of corrugations, wherein the corrugation troughs (13) are each situated in the junction region - as seen in a peripheral direction - between adjacent beads (11), and wherein the corrugation troughs (13) each have a depth which is less than the depth of the beads (11).

5. An impact absorbing device according to any one of claims 1 to 4, **characterised in that** at least four parallel beads (11), which extend peripherally, are disposed between adjacent rib-like regions (10) in the wall of the hollow body (5).

6. An impact absorbing device according to any one of claims 1 to 5, **characterised in that** the hollow body (5) consists of steel or aluminium.

7. An impact absorbing device according to any one of claims 1 to 7, **characterised in that** the hollow body (5) is of pot-shaped construction and the base (6) of the hollow body (5) is formed as a flange.

8. An impact absorbing device according to claim 7, **characterised in that** the face (7) of the hollow body (5) facing away from the base (6) is bent outwards so that the edge region which is thereby formed can either itself be used as a flange or can be attached to a flange plate associated with the hollow body (5).

## Revendications

1. Amortisseur de choc pour véhicules automobiles qui, lors d'un choc, absorbe l'énergie par déformation plastique, comprenant
au moins un corps creux (5) tubulaire en métal, à section transversale circulaire, ovale ou polygonale, notamment rectangulaire ou carrée,
au moins trois zones (10) formant cordons qui s'étendent dans la direction de l'axe longitudinal (9) du corps creux (5), étant prévues,
au moins trois moulures (11) parallèles, qui s'étendent dans la direction périphérique et sont orientées en direction de l'espace intérieur du corps creux, étant aménagées dans la paroi dudit corps creux (5), et
les moulures (11) étant disposées de manière à former entre des moulures (11) voisines, - vu dans la direction axiale - des zones (12) cintrées vers l'extérieur,
**caractérisé en ce que**
les zones (10) formant cordons sont aménagées dans le corps creux et sont réparties de manière uniforme sur le pourtour du corps creux (5),
chaque fois au moins trois moulures (11) qui s'étendent dans la direction périphérique sont disposées entre des zones (10) formant cordons voisines, et
les zones (12) cintrées voisines dans la direction périphérique entre les moulures (11) entourent en forme d'anneau ou d'hélice l'axe longitudinal (9) du corps creux (5).

2. Amortisseur de chocs selon la revendication 1, **caractérisé en ce que** dans un corps creux (5) à section transversale circulaire ou ovale, il est prévu au moins six zones (10) formant cordons qui s'étendent dans la direction de l'axe longitudinal (9).

3. Amortisseur de chocs selon la revendication 1, **caractérisé en ce que** dans un corps creux (5) à section transversale polygonale le nombre des zones (10) formant cordons qui s'étendent dans la direction de l'axe longitudinal (9) est au moins égal au nombre d'angles.

4. Amortisseur de chocs selon une des revendications 1 à 3, **caractérisé en ce que** les zones (10) formant cordons présentent dans la direction axiale un tracé ondulé, les creux d'ondes (13) étant situés chaque fois dans la zone de liaison - vu dans la direction périphérique - entre des moulures (11) voisines et les creux d'ondes (13) présentant chaque fois une profondeur qui est inférieure à la profondeur des moulures (11).

5. Amortisseur de chocs selon une des revendications 1 à 4, **caractérisé en ce qu'**entre des zones (10) formant cordons voisines, au moins quatre moulures (11) parallèles dans la direction périphérique sont aménagées dans a paroi du corps creux (5).

6. Amortisseur de chocs selon une des revendications 1 à 5, **caractérisé en ce que** le corps creux (5) est en métal ou en aluminium.

7. Amortisseur de chocs selon une des revendications 1 à 6, **caractérisé en ce que** le corps creux (5) a une forme de pot et le fond (6) du corps creux (5) est conformé en bride.

8. Amortisseur de chocs selon la revendication 7 **caractérisé en ce que** la face (7) du corps creux (5) éloignée du fond (6) est cintrée en direction de l'extérieur de telle sorte que la zone de bord ainsi formée puisse être utilisée comme bride en tant que telle ou être liée à une plaque formant bride associée au corps creux (5).
